# EUROPEAN PATENT APPLICATION

(11) **EP 4 850 515 A1**
(43) Date of publication of application: **09.12.2026**
(21) Application number: 25925873.9
(22) Date of filing: 15.10.2025
(51) Int. Cl.: A01D 34/416

(54) **GRASS TRIMMING STRUCTURE AND COURTYARD ROBOT**

(30) Priority: 05.03.2025 CN 202520389021 U; 18.04.2025 CN 202520745975 U
(71) Applicant: Shenzhen Hanyang Technology Co., Ltd., Shenzhen, Guangdong 518000 (CN)
(72) Inventor: TIAN, Anyang, Shenzhen, Guangdong 518000 (CN); ZHU, Taotao, Shenzhen, Guangdong 518000 (CN); SONG, Yongqi, Shenzhen, Guangdong 518000 (CN); HAN, Baofeng, Shenzhen, Guangdong 518000 (CN); WANG, Yijie, Shenzhen, Guangdong 518000 (CN); HE, Zhihai, Shenzhen, Guangdong 518000 (CN); ZHANG, Huifeng, Shenzhen, Guangdong 518000 (CN); ZHENG, Haoxin, Shenzhen, Guangdong 518000 (CN)
(74) Representative: Abel & Imray LLP
(86) International application number: PCT/CN2025/127720
(87) International publication number: WO 2026/184093

(57) **Abstract**

The present application relates to a grass trimming structure and a courtyard robot including the grass trimming structure. The grass trimming structure includes a grass trimming rope, a winding member, a movable block, and a base. The winding member includes a central shaft, a bottom surface of the winding member is provided with a movable groove, and the grass trimming rope is wound around the central shaft; the movable block abuts against the movable groove; and the base includes a connecting shaft penetrating through the base, a connecting column, and a rope outlet, the central shaft sleeves the connecting shaft, the movable block is movably connected to the connecting column, and the rope outlet is configured to allow the grass trimming rope to extend out from the winding member.

## Description

### TECHNICAL FIELD

The present application relates to the technical field of grass trimming by courtyard robots, in particular to a grass trimming structure and a courtyard robot.

### BACKGROUND

A rope lawn mower, as a tool designed specifically for courtyards, can perform a mowing task within a preset region. However, an extension length of a grass trimming rope in a current lawn mower is manually controlled, and manual control is not convenient in some usage scenarios.

Therefore, those skilled in the art urgently need to find a new technical solution to solve the above problems.

### SUMMARY

Embodiments of the present application aim to provide a grass trimming structure and a courtyard robot, which can solve the technical problem of inconvenient manual control over rope lawn mowers in the prior art.

A grass trimming structure includes: a grass trimming rope; a winding member, including a central shaft, wherein a bottom surface of the winding member is provided with a movable groove, and the grass trimming rope is wound around the central shaft; a movable block, abutting against the movable groove; and a base, including a connecting shaft penetrating through the base, a connecting column, and a rope outlet, wherein the central shaft sleeves the connecting shaft, the movable block is movably connected to the connecting column, and the rope outlet is configured to allow the grass trimming rope to extend out from the winding member.

A courtyard robot includes a connecting structure, a grass trimming structure, and a vehicle body, wherein one end of the connecting structure is connected to the grass trimming structure, and the other end of the connecting structure is connected to the vehicle body.

Beneficial effects: the movable groove of the winding member of the grass trimming structure abuts against the movable block, and the connecting column in the base limits a position of the movable block, so that the grass trimming rope wound by the winding member can automatically extend out from the rope outlet of the base under the driving of the movable block during the working of the grass trimming structure, ensuring the convenience of mowing and thus ensuring the mowing efficiency of the grass trimming structure.

By arranging an induction sensor in the grass trimming structure to sense a swing angle of the grass trimming structure and whether the grass trimming structure is mounted on the vehicle body, when the induction sensor detects that a swing amplitude of the grass trimming structure exceeds a safety threshold, or the induction sensor recognizes abnormal situations such as looseness or incomplete mounting of the grass trimming structure, the induction sensor feeds relevant information back to a controller, and the controller controls the grass trimming structure in an autonomous moving device to stop swinging and controls the autonomous moving device to stop working. In this way, it can be ensured that the grass trimming structure will not be damaged or broken after exceeding a certain swing angle, and whether the grass trimming structure is mounted in place can be detected timely, which can ensure that the grass trimming structure is not prone to falling off and ensure the working efficiency of the autonomous moving device.

### BRIEF DESCRIPTION OF DRAWINGS

FIG. 1 is a schematic structural diagram of an embodiment of a grass trimming structure disclosed in the embodiment of the present application.
FIG. 2 is a schematic exploded view of an embodiment of a grass trimming structure disclosed in the embodiment of the present application.
FIG. 3 is a schematic structural diagram of an embodiment of a grass trimming structure disclosed in the embodiment of the present application.
FIG. 4 is a schematic structural diagram of an embodiment of a grass trimming structure disclosed in the embodiment of the present application.
FIG. 5 is a schematic structural diagram of an embodiment of a grass trimming structure disclosed in the embodiment of the present application.
FIG. 6 is a schematic structural exploded view of an embodiment of a grass trimming structure disclosed in the embodiment of the present application.
FIG. 7 is a schematic structural exploded view of an embodiment of a grass trimming structure disclosed in the embodiment of the present application.
FIG. 8 is a schematic structural diagram of an embodiment of a grass trimming module where a grass trimming structure disclosed in the embodiment of the present application is located.
FIG. 9 is a schematic structural diagram of an embodiment of a courtyard robot where a grass trimming structure disclosed in the embodiment of the present application is located.
FIG. 10 is a schematic diagram of a grass trimming module induction system of an autonomous moving device in an embodiment of the present application.
FIG. 11 is another schematic diagram of a grass trimming module induction system of an autonomous moving device in an embodiment of the present application.

1. Grass trimming rope; 2. Winding member; 201. Central shaft; 202. Movable groove; 2021. First groove position; 2022. Second groove position; 203. Threading opening; 204. Line clamping groove; 3. Movable block; 301. Fixing hole; 302. Boss; 303. Movable member; 4. Base; 401. Connecting shaft; 402. Connecting column; 403. Rope outlet; 404. First sliding platform; 405. Second sliding platform; 406. Connecting member; 407. Clamping opening; 5. Rope discharging member; 501. Clamping groove; 502. Line outlet; 6. Cover plate; 601. Panel; 602. Buckle; 7. Grass trimming structure; 8. Connecting structure; 9. Vehicle body; 10. Courtyard robot; 11. Active state A; 12. Active state B; 13. Movement trajectory; 14. Mounting disc; 15. Blade; 16. Motor; 1A. Induction sensor; 101. Angle induction sensor; 102. Anti-displacement induction sensor; 2A. Controller; 201A. Secondary controller; 202A. Master controller; 203A. First connector; 204A. Second connector; 205. Communication interface; 206. First pin; 207. First anti-static device; 208. Second anti-static device; 209. Second pin; 210. First input resistor; 211. Second input resistor; 212. First pull-up resistor; 213. Second pull-up resistor; 214. Current-limiting resistor; 215. Third pin; 216. Third anti-static device; 217. Fourth pin; 218. Third input resistor; 219. Fourth anti-static device; 220. Filtering capacitor; 221. Third pull-up resistor; 222. Serial signal interface; 223. Clock interface; and 224. SIG signal interface.

### DETAILED DESCRIPTION

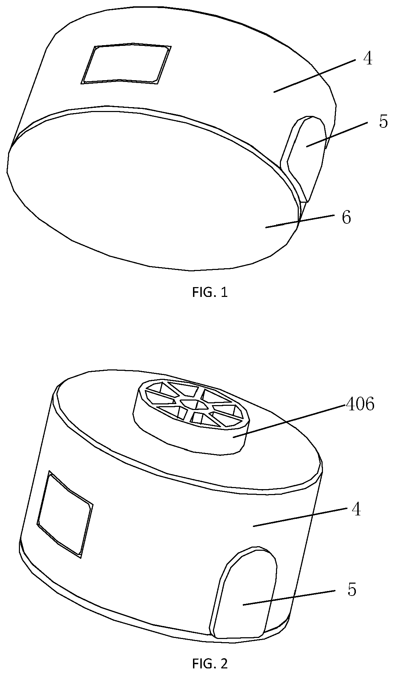

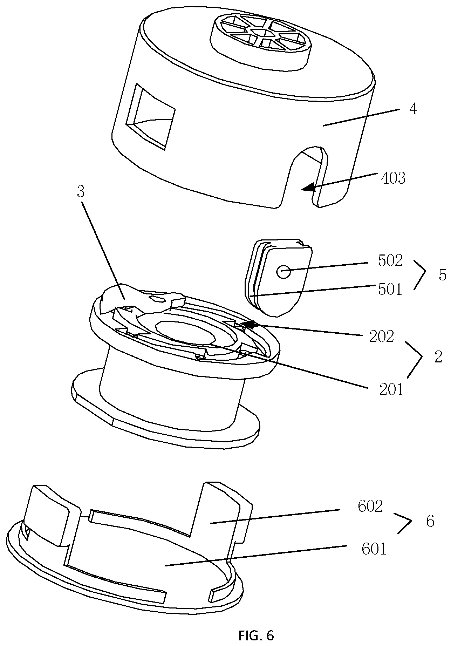

As shown in FIG. 1 to FIG. 9, a grass trimming structure 7 disclosed in an embodiment of the present application includes:
a grass trimming rope 1;
a winding member 2, including a central shaft 201 and a movable groove 202 formed in a bottom surface of the winding member, wherein the grass trimming rope 1 is circumferentially arranged on the central shaft 201 of the winding member 2;
a movable block 3, abutting against the movable groove 202; and
a base 4, including a connecting shaft 401 penetrating through the base 4, a connecting shaft 402, and a rope outlet 403, wherein the central shaft 201 sleeves the connecting shaft 401, the movable block 3 is movably connected to the connecting shaft 402, and the rope outlet 403 is configured to allow the grass trimming rope 1 to extend out from the winding member 2.

A material of the grass trimming rope 1 may be selected according to specific needs, such as selecting a nylon material with sufficient strength or other materials of the same strength. During high-speed rotation, the grass trimming rope 1 may generate corresponding cutting force. The central shaft 201 that may be wound with lines is arranged in the winding member 2. An interior of the central shaft 201 is designed in a hollowed-out manner, and the central shaft may directly sleeve the connecting shaft 401 of the base 4. A plurality of layers of mutually-stacked grass trimming ropes 1 may be wound around an outer circumferential surface of the central shaft 201. One end of the movable block 3 may be movably connected to the connecting shaft 402 in the base 4, and the other end of the movable block 3 may abut against the movable groove 202 of the winding member 2. In a movable state, the movable block 3 may move within a space limited by the movable groove 202. The connecting shaft 401 of the base 4 may also be designed in a hollowed-out manner, and the hollowed-out space may be penetrated by a driving shaft of a motor 16 connected to the grass trimming rope 1. At least one rope outlet 403 is formed in a side wall of the base 4, and the rope outlet 403 may be designed as a notch. The movable block 3 is movably connected to the connecting shaft 402 fixed inside the base 4. Specifically, when the driving shaft rotates, the base 4 may be driven by the driving shaft to rotate (the base 4 is driven by the driving shaft to rotate and may be made of lighter materials such as plastic). The rotation causes the movable block 3 of the connecting shaft 402 mounted in the base 4 to generate centrifugal force and then move. The movable block 3 may rotate in the internal space of the base 4, and drive the winding member 2 to rotate, and then the grass trimming rope 1 is discharged from the rope outlet 403 in the side wall of the base 4.

In the present embodiment, the movable groove 202 of the winding member 2 of the grass trimming structure 7 abuts against the movable block 3, and the connecting shaft 402 in the base 4 limits the position of the movable block 3, so that the grass trimming rope 1 wound by the winding member 2 can automatically extend out from the rope outlet 403 of the base 4 under the driving of the movable block 3 during the working of the grass trimming structure 7, ensuring the convenience of mowing and thus ensuring the mowing efficiency of the grass trimming structure 7.

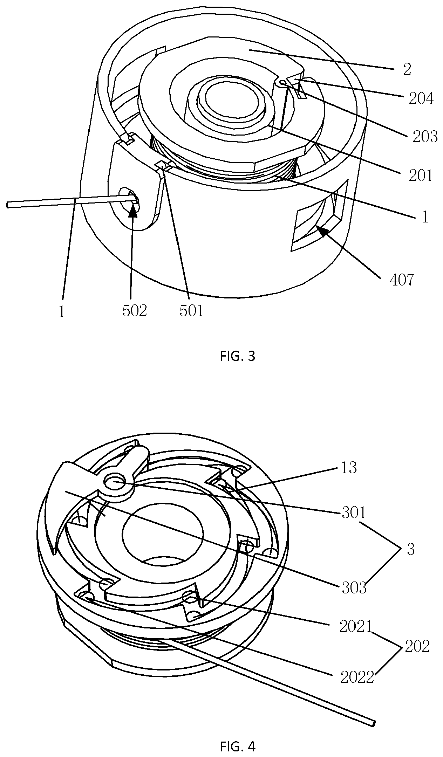

As shown in FIG. 3, in an embodiment, the grass trimming rope 1 is wound around the central shaft 201 in at least one layer; and the grass trimming rope 1 is wound around the central shaft 201 in multiple layers, and extension lengths of the grass trimming rope 1 under different layers are not consistent.

At least one layer of grass trimming rope 1 in a circumferential state may be wound on the central shaft 201. That is, when there are a plurality of layers of grass trimming ropes 1, the grass trimming ropes 1 are mutually stacked, a circumference of the outer layer is greater than that of the inner layer, and an extension length of the outer layer of grass trimming rope 1 extending out of the rope outlet 403 is greater than that of the inner layer of grass trimming rope extending out of the rope outlet 403.

As shown in FIG. 1 to FIG. 6, in an embodiment, the grass trimming structure 7 further includes a rope discharging member 5, the rope discharging member 5 includes a clamping groove 501 and a line outlet 502, the clamping groove 501 is clamped on a side wall of the base 4 close to the rope outlet 403, and the line outlet 502 is formed corresponding to the rope outlet 403.

The rope discharging member 5 may be arranged as a metal member, and an edge of the rope discharging member 5 is arranged surrounding the clamping groove 501. The clamping groove 501 may be clamped on the side wall of the base 4 close to the rope outlet 403. The line outlet 502 is formed in a plate surface position corresponding to the rope outlet 403. The grass trimming rope 1 may extend out from the line outlet 502 and the rope outlet 403 to work.

In the present embodiment, after the rope discharging member 5 is clamped on the side wall of the line outlet 502 in the base 4, the grass trimming rope 1 extending out from the line outlet 502 and the rope outlet 403 is more stable and less likely to fall off. The rope discharging member 5 made of the metal member can reduce the wear of the structure caused by the grass trimming rope 1.

As shown in FIG. 3 to FIG. 7, in an embodiment, a threading opening 203 is formed in a position of the winding member 2 spaced apart from the central shaft 201, and a line clamping groove 204 is formed in a position of the winding member 2 spaced apart from the threading opening 203, one end of the grass trimming rope 1 penetrates through the threading opening 203 and then is clamped with the line clamping groove 204, and the other end of the grass trimming rope 1 extends out of the rope outlet 403.

One end surface of the winding member 2 may be provided with the threading opening 203 spaced apart from the central shaft 201. A shape of the threading opening 203 may be set to facilitate line discharging, such as a circular hole shape. The number of the threading openings 203 may also be set according to demands. The most front end of the grass trimming rope 1 is inserted into the threading opening 203. The line clamping groove 204 is formed in one side of the winding member 2 close to the threading opening 203. One line clamping groove 204 may be provided with two ends, the two ends form one space for clamping the grass trimming rope 1, and the grass trimming rope 1 penetrates through the grass trimming rope 1 at the threading opening 203 and is clamped to the line clamping groove 204.

In the present embodiment, the design of the threading opening 203 and the line clamping groove 204 makes the fixing and replacement of the grass trimming rope 1 extremely simple, that is, only the grass trimming rope 1 needs to penetrate through the threading opening 203 and be clamped with the line clamping groove 204, without complex operating steps or tools. The stable clamping function of the line clamping groove 204 ensures that the grass trimming rope 1 does not loosen or fall off at will during use, thereby improving the overall stability and safety of the structure.

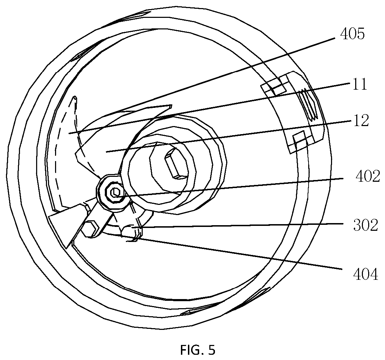

As shown in FIG. 4 and FIG. 5, in an embodiment, the movable block 3 includes a fixing hole 301, a boss 302, and a movable member 303, the fixing hole 301 is movably connected to the connecting shaft 402 of the base 4, the boss 302 abuts against the movable groove 202, and the movable member 303 abuts against a side wall of the base 4.

The movable block 3 is provided with the fixing hole 301 that may be connected to the connecting shaft 402 of the base 4. A shape of the fixing hole 301 may be adapted to the shape of the connecting shaft 402, the boss 302 may be arranged as a structure of a circular truncated cone, and the protrusion structure may be clamped with the side wall of the movable groove 202. In FIG. 5, the movable block 3 is illustrated in an active state A 11 and an active state B 12. Because the base 4 is driven by the motor 16 to rotate, the movable block 3 can rotate alternately on the base 4 according to the active states A and B, and then drive the winding member 2 to rotate, and the grass trimming rope 1 in the winding member 2 is also driven to rotate. FIG. 4 illustrates a movement trajectory 13 of the movable block 3, specifically the movement trajectory of the boss 302 of the movable block 3 within the movable groove 202.

In the present embodiment, the connection stability of the entire structure is significantly improved by the adaptive connection between the fixing hole 301 and the connecting shaft 402, as well as the clamped connection between the boss 302 and the side wall of the movable groove 202. The structural design of the boss 302 not only increases a contact area between the movable block 3 and the movable groove 202, but also provides an additional support force through a clamping mechanism, which helps to enhance the strength and durability of the entire structure.

As shown in FIG. 5, in an embodiment, the base 4 is provided with a first sliding platform 404 and a second sliding platform 405 at positions spaced apart from the connecting shaft 402, the first sliding platform 404 is arranged corresponding to a bottom surface of the boss 302, and the second sliding platform 405 is arranged corresponding to a bottom surface of the movable member 303.

The first sliding platform 404 and the second sliding platform 405 may be distributed at a position of the base 4 close to the movable block 3, protrude relative to a plane of the base 4 and then abut against a sliding block. Each sliding platform abuts against the sliding block at a different position. The first sliding platform 404 is arranged corresponding to the bottom surface of the boss 302, and the second sliding platform 405 is arranged corresponding to the bottom surface of the movable member 303.

In the present embodiment, the first sliding platform 404 and the second sliding platform 405 may be respectively arranged on two sides or specific positions of the base 4, and protrude relative to the plane of the base 4, so as to abut against the sliding block. This distribution arrangement helps to achieve stable sliding of the sliding block in different directions or positions.

As shown in FIG. 4, in an embodiment, the movable grooves 202 are circumferentially formed in the bottom surface of the winding member 2, each movable groove 202 includes a first groove position 2021 and a second groove position 2022, and the boss 302 moves between the first groove positions 2021 and the second groove positions 2022.

The number of the movable grooves 202 may be more than one, and the movable grooves may be circumferentially formed in the ground of the winding member 2 according to demands. The movable grooves 202 may form a travel path for the boss 302 of the movable member 303, and the travel path is formed by the first groove positions 2021 and the second groove positions 2022.

In the present embodiment, the shapes and positions of the movable grooves 202 can optimize the travel efficiency of the boss 302 in the groove positions, which helps the boss 302 to drive the winding member 2 to stably discharge the rope after the movement.

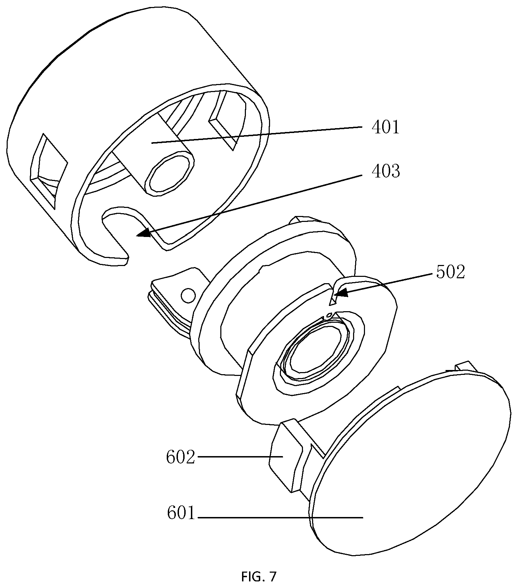

As shown in FIG. 2 and FIG. 7, in an embodiment, a connecting member 406 is arranged at a position of the bottom of the base 4 and a middle region of the connecting shaft 401, and the connecting member 406 and the connecting shaft 401 are penetrated by a driving shaft of a motor 16.

The connecting member 406 may be directly connected to or arranged at the bottom of the base 4. The connecting member 406 is provided with a movable shaft, the movable shaft is designed in a hollowed-out manner, and the movable shaft may be movably connected to the driving shaft of the motor 16. The movable shaft is arranged corresponding to the connecting shaft 401, the connecting shaft 401 may also be movably connected to the driving shaft of the motor 16. At the same time, the connecting shaft 401 is arranged on the base 4, and the entire base 4 may be movably connected to the driving shaft of the motor 16. The motor 16 may be a high-speed rotating motor 16 of the grass trimming rope 1. Under the working of the motor 16, the grass trimming rope 1 of the winding member 2 may extend out of the rope outlet 403 due to centrifugal force and then rotate. Specifically, there is a driving connection state between the driving shaft of the motor 16 and the winding member 2.

In the present embodiment, by designing the middle region of the connecting shaft 401 as a structure that can be penetrated by the driving shaft of the motor 16, the space occupation of the entire structure is effectively reduced. The connecting shaft 401 is directly connected to the driving shaft of the motor 16 in a penetrating manner, which helps to improve the transmission efficiency and performance of the entire structure.

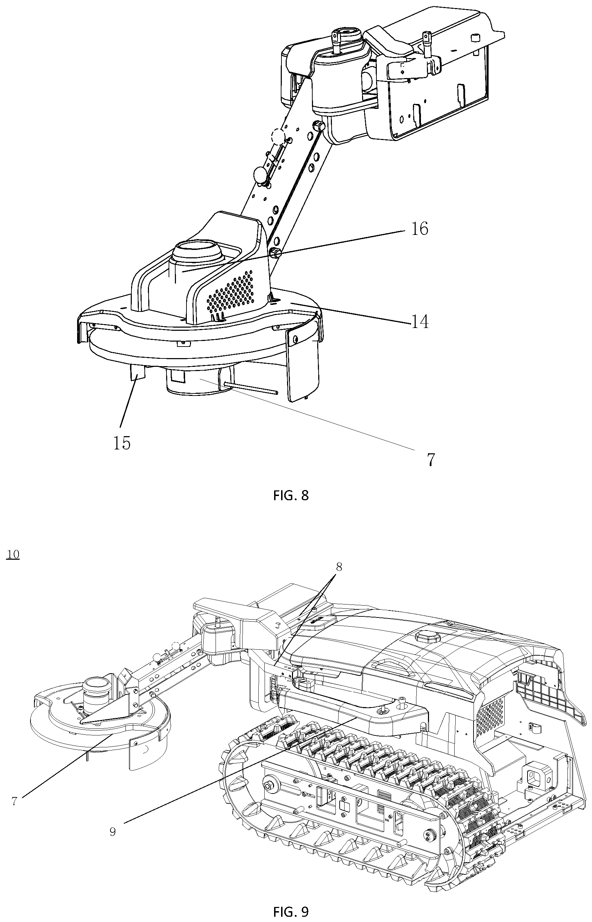

As shown in FIG. 8, in an embodiment, the grass trimming structure 7 further includes a mounting disc 14, and the base 4 is embedded at a position of the mounting disc 14 close to the ground. A blade 15 for cutting the grass trimming rope 1 is arranged at a position of the mounting disc 14 close to the rope outlet 403.

The mounting disc 14 may be of a disc structure, with the motor 16 arranged at its upper end and the grass trimming rope 1 arranged at its lower end. The motor 16 is connected to the grass trimming rope 1 in a driving manner, the motor 16 may drive the grass trimming rope 1 to circumferentially rotate around the central shaft 201, and the grass trimming rope 1 may generate power for grass trimming or cutting. The blade 15 is arranged to cut the grass trimming rope 1 that extends out of the rope outlet 403 this time, and the blade 15 may be arranged at one of the positions in the mounting disc 14.

In the present embodiment, the mounting disc 14 may be a main structure of the entire grass trimming structure 7, and can provide mounting positions or spaces for various structures of the grass trimming structure 7.

As shown in FIG. 7, in an embodiment, the grass trimming structure 7 further includes a cover plate 6, the cover plate 6 includes a panel 601 and buckles 602, the panel 601 covers the base 4, and the buckles 602 are clamped to a clamping opening 407 formed in the side wall of the base 4.

The cover plate 6 covers the base 4 (an upper part of the driving shaft). Specifically, the cover plate 6 may be provided with two buckles 602. After the buckles 602 extend into the mounting space of the base 4, the buckles are clamped to the clamping opening 407 in the side wall of the base 4, and the cover plate 6 may cover the base 4 at the same time.

In the present embodiment, by covering an opening in the base 4 with the cover plate 6, on the one hand, impurities can be avoided from being accumulated inside the base 4 and affecting the rope discharging operation. On the other hand, the stability of the cover plate 6 on the base 4 can be ensured by the buckles 602. On the one hand, the winding member 2, the grass trimming rope 1, and the movable block 3 are avoided from falling off from the base 4 (the opening of the base 4 is close to the ground). On the other hand, it facilitates disassembly for line replenishment after the grass trimming rope 1 in the winding member 2 is used up.

As shown in FIG. 8 and FIG. 9, a courtyard robot 10 disclosed in an embodiment of the present application includes: a connecting structure 8, a grass trimming structure 7, and a vehicle body 9, one end of the connecting structure 8 is connected to the grass trimming structure 7, and the other end of the connecting structure is connected to the vehicle body 9.

The courtyard robot 10 is provided with the connecting structure 8, the grass trimming structure 7, a front head, and the vehicle body 9. The grass trimming structure 7 is provided with a swing arm, one end of the swing arm may be movably connected to the connecting structure 8, and the other end of the swing arm may be fixedly connected to the grass trimming structure 7. A plurality of interconnected connecting members 406 are arranged in the connecting structure 8, and each connecting member 406 has a corresponding connection position, including a connection position connected with a body of an autonomous moving device and a connection position connected with the swing arm. The swing arm extends downward in a length direction and may swing within a specified range, with a swing amplitude range of 0-90 degrees (the swing direction is from a side of the vehicle body 9 of the courtyard robot 10 to a front direction of the vehicle body 9 of the courtyard robot 10). The structure arranged at an end of the swing arm may be movably connected to the connecting structure 8. The front head of the courtyard robot 10 may be connected to the vehicle body 9 through a detachable structure. The front head may be arranged at a position in an advancing direction of the vehicle body 9, and the grass trimming structure 7 may be arranged at a tail position of the vehicle body 9. The grass trimming structure 7 protrudes relative to the vehicle body 9 and the front head, which is conducive to perform grass trimming on grass in a boundary region by the grass trimming structure 7.

In the present embodiment, the connecting structure 8 arranged in the grass trimming structure 7 is connected to the vehicle body 9 of the courtyard robot 10, and the swing arm arranged in the grass trimming structure 7 may drive the grass trimming structure 7 to swing within a certain range. Therefore, when the courtyard robot 10 is working, a grass trimming rope 1 in the grass trimming structure 7 may perform grass trimming on the grass in the boundary region. Even if a mounting disc 14 in the grass trimming structure 7 collides with an obstacle at the edge, the swing arm arranged in the grass trimming structure 7 may also drive the grass trimming structure 7 to perform grass trimming in other regions. In this way, the mowing effect of the courtyard robot 10 currently provided with the grass trimming structure 7 in the boundary region can be guaranteed.

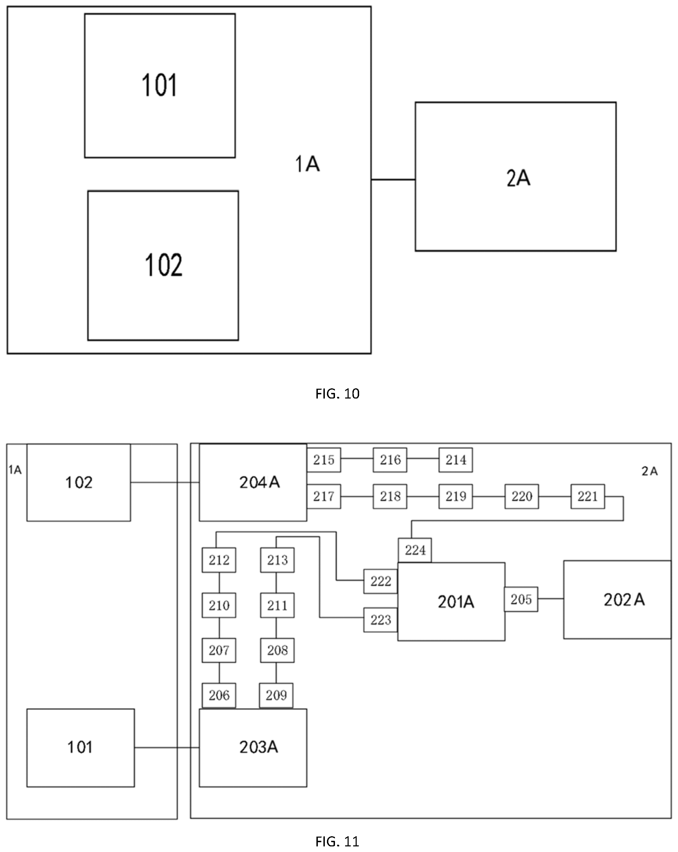

As shown in FIG. 10 and FIG. 11, the present embodiment provides a grass trimming module induction system of an autonomous moving device, wherein a grass trimming module may include the grass trimming structure 7 in the above embodiment, and the autonomous moving device may be a courtyard robot 10. The system includes:
an induction sensor 1A, including an angle induction sensor 101 and an anti-displacement induction sensor 102, wherein the angle induction sensor 101 and the anti-displacement induction sensor 102 are respectively arranged on the grass trimming module (grass trimming structure 7), the angle induction sensor 101 is configured to detect a swing range of the grass trimming module (grass trimming structure 7) relative to a vehicle body, and the anti-displacement induction sensor 102 is configured to detect whether the grass trimming module (grass trimming structure 7) is correctly mounted in the vehicle body; and
a controller 2A, electrically connected to the induction sensor 1A, and configured to receive an induction signal transmitted by the induction sensor 1A; wherein when the induction signal is transmitted by the angle induction sensor 101, the controller controls the grass trimming module (grass trimming structure 7) in the autonomous moving device to stop swinging or controls the autonomous moving device to move, and when the induction signal is transmitted by the anti-displacement induction sensor 102, the controller controls the autonomous moving device to stop working.

As a type of robot applied in outdoor environments, the autonomous moving device may be provided with the grass trimming module (grass trimming structure 7) at its tail or head position. The grass trimming module (grass trimming structure 7) is connected to a main body of the vehicle body in the autonomous moving device through the swing arm, and automatic grass trimming can be achieved through a motor arranged in the grass trimming module (grass trimming structure 7). The angle induction sensor 101 may be a sensor in a magnetic encoder. The sensor may be mounted at a first mounting position of the swing arm, and a disk (detecting member) may be mounted at a second mounting position corresponding to the first mounting position. When the swing arm rotates, the sensor (such as a Hall sensor or a magnetoresistive sensor) in the magnetic encoder can detect changes of a magnetic field on the disk in a fixed state. As the swing arm rotates, a magnetic field signal received by the angle induction sensor 101 also changes. In this way, after the grass trimming module (grass trimming structure 7) in the swing arm collides with an obstacle, the angle induction sensor 101 may feed collision information back to a secondary controller 201A and a master controller 202A in the autonomous moving device. A mounting detecting sensor may be a Hall sensor, the sensor may be mounted at a third mounting position of the swing arm, while a magnet (detecting member) may be mounted at a fourth mounting position corresponding to the third mounting position. The Hall sensor is configured to detect a presence or strength of the magnetic field. When the magnet is close to or away from the sensor, the change of the magnetic field strength causes a change of Hall voltage. Therefore, by mounting the detecting sensor, it can be determined whether the grass trimming module (grass trimming structure 7) is mounted on the main body of the vehicle body and whether it is mounted normally on the main body of the vehicle body. The controller 2A may be divided into the secondary controller 201A and the master controller 202A. The secondary controller 201A may be arranged in the grass trimming module (grass trimming structure 7). After the grass trimming module (grass trimming structure 7) collides and contacts with the obstacle, the swing angle range may be within a preset angle range, such as 0-90 degrees. Once the angle induction sensor 101 recognizes that the angle exceeds the preset angle range, the secondary controller 201A transmits the recognized information to the master controller 202A for judgment. The master controller 202A issues a control instruction according to a judgment result, so as to control the grass trimming module (grass trimming structure 7) to stop swinging or to control the movement of the autonomous moving device (for example, the grass trimming module (grass trimming structure 7) is mounted in the vehicle tail, and after a large angle deviation occurs to the grass trimming module (grass trimming structure 7), the autonomous moving device can move forward to get out of trouble). If the grass trimming module (grass trimming structure 7) is not correctly mounted on the vehicle body, the secondary controller 201A transmits the recognized information to the master controller 202A for judgment. The master controller 202A issues a control instruction according to the judgment result, so as to control the grass trimming module (grass trimming structure 7) and all devices to stop working (in a shutdown state). The master controller 202A is arranged on the vehicle body of the autonomous moving device and is mainly configured to control functions of all functional modules in the vehicle body of the autonomous moving device, such as a walking function of a walking module on the vehicle body, a mowing function of a mowing module on a bottom of the vehicle body, and a grass trimming function of the grass trimming module (grass trimming structure 7) arranged on the side of the vehicle body.

It should be noted that the angle induction sensor 101 mentioned above may be arranged in the grass trimming module (grass trimming structure 7), while the anti-displacement induction sensor 102 may be arranged in the grass trimming module (grass trimming structure 7), and a detecting member corresponding to the angle induction sensor 101 may be arranged in the grass trimming module (grass trimming structure 7), while a detecting member corresponding to the anti-displacement induction sensor 102 may be arranged in the vehicle body.

In the present embodiment, by arranging the induction sensor 1A in the grass trimming module (grass trimming structure 7) to sense the swing angle of the grass trimming module (grass trimming structure 7) and whether the grass trimming module (grass trimming structure 7) is mounted on the vehicle body, when the induction sensor 1A detects that a swing amplitude of the grass trimming module (grass trimming structure 7) exceeds a safety threshold, or the induction sensor 1A recognizes abnormal situations such as looseness or incomplete mounting of the grass trimming module (grass trimming structure 7), the induction sensor 1A feeds relevant information back to the controller 2A, and the controller 2A controls the grass trimming module (grass trimming structure 7) in the autonomous moving device to stop swinging and controls the autonomous moving device to stop working. In this way, it can be ensured that the grass trimming module (grass trimming structure 7) will not be damaged or broken after exceeding a certain swing angle, and whether the grass trimming module (grass trimming structure 7) is mounted in place can be detected timely, which can ensure that the grass trimming module (grass trimming structure 7) is not prone to falling off and ensure the working efficiency of the autonomous moving device.

As shown in FIG. 11, as an embodiment, the controller 2A includes a secondary controller 201A and a master controller 202A, the secondary controller 201A is simultaneously electrically connected to the angle induction sensor 101 through a first connector 203A, the secondary controller 201A is electrically connected to the anti-displacement induction sensor 102 through a second connector 204A, the secondary controller 201A is electrically connected to the master controller 202A through a communication interface 205, the secondary controller 201A is configured to control the grass trimming module (grass trimming structure 7), and the master controller 202A is arranged on the vehicle body of the autonomous moving device and configured to control the secondary controller 201A.

The setting positions of the secondary controller 201A (such as MCU) and the master controller 202A (such as ECU) are as described above. A level of the master controller 202A is higher than that of the secondary controller 201A. The secondary controller 201A is configured to recognize the signal information of the induction sensor 1A. Based on the signal information, the master controller 202A judges the corresponding result (for example, the angle swing exceeds the specified range or the mounting position is far away), and controls the secondary controller 201A to take a series of targeted measures according to the judged result. The secondary controller 201A is electrically connected to the angle induction sensor 101 through two interfaces (arranged on the secondary controller 201A), one is a serial signal interface 222, and the other is a clock signal interface. The secondary controller 201A is further electrically connected to the anti-displacement induction sensor 102 through an SIG signal interface 224 (arranged on the secondary controller 201A). The secondary controller 201A is connected to the master controller 202A via a communication interface 205 through the fourth interface, namely the first pin 206, and the communication interface 205 is an interface related to a CAN line.

In the present embodiment, the secondary controller 201A is controlled by the master controller 202A, and the secondary controller and the master controller control the grass trimming module (grass trimming structure 7) in a division manner to ensure the grass trimming function of the grass trimming module (grass trimming structure 7).

As shown in FIG. 11, as an embodiment, the secondary controller is electrically connected to the angle induction sensor through the serial signal interface 222 and the clock interface 223 respectively, the serial signal interface is configured to transmit a first signal and a second signal according to an induction situation of the angle induction sensor 101, and the clock interface 223 is configured for the angle induction sensor 101 to transmit a synchronous clock signal to the secondary controller 201A.

A first signal in the serial signal interface may refer to a signal (such as a signal 0) when it is not triggered, and the second signal may refer to a signal (such as a signal 1) when it is triggered. There are also two signals on the SIG signal interface 224, one signal indicates that the detecting member is very close to the anti-displacement induction sensor 102, and the other signal indicates that the detecting member is far away from the anti-displacement induction sensor 102.

In the present embodiment, the first signal and the second signal are transmitted through the serial signal interface 222 to ensure efficient data exchange and strong anti-interference ability between the angle induction sensor 101 and the secondary controller 201A, and reduce the risk of signal distortion. The serial signal interface 222 is suitable for long-distance data transmission and is suitable for scenarios where the sensor and the controller 2A in the autonomous moving device may be spatially separated. The clock interface 223 provides a synchronous clock signal for the secondary controller 201A, ensuring that data acquisition of the sensor and processing of the controller 2A run on a unified time reference, and avoiding misjudgment or delay caused by clock deviation. The synchronous clock signal may optimize a data transmission timing, so that the secondary controller 201A can respond in real time to events such as angle exceeding limits or mounting abnormality, and quickly trigger protective actions (such as stopping swinging, moving, or shutdown). Timing uncertainty in asynchronous communication is eliminated through clock synchronization, and the risk of system crashes caused by signal delay or confusion is reduced.

As shown in FIG. 11, as an embodiment, a first pin 206 on the first connector 203A corresponding to the secondary controller 201A is electrically connected to a first anti-static device 207, and a second pin 209 on the first connector 203A of the secondary controller 201A is electrically connected to a second anti-static device 208.

The first connector 203A may be a rectangular electrical connector, such as a J3 connector. The first anti-static device 207 and the second anti-static device 208 are electrically connected to different pins on the connector, which can suppress the interference or damage of electrostatic discharge (ESD) to the secondary controller 201A. At the same time, the two anti-static devices can provide additional levels of electrostatic protection and work together to form a multi-level protection network. It should be noted that the sensor connected to the connector in the present embodiment is the angle induction sensor 101.

It should be noted that in SPI communication, a chip selection signal interface is electrically connected to one pin of the first connector 203A, and meanwhile, a ninth interface is also electrically connected to an input resistor and the anti-static device. The other pin of the first connector 203A is electrically connected to a voltage of 5V. At the same time, the pin is also electrically connected to the input resistor and the anti-static device.

As shown in FIG. 11, as an embodiment, the first pin 206 on the first connector 203A corresponding to the secondary controller 201A is electrically connected to a first input resistor 210 for protecting the pin, and the second pin 209 is electrically connected to a second input resistor 211 for protecting the pin.

The first pin 206 is electrically connected to the first input resistor 210, which is configured to protect a certain key pin, that is, to limit a current in a case of external overcurrent or short circuit, and prevent damage to a chip pin. The second pin 209 is also electrically connected to the second input resistor 211, which can also prevent damage to the chip pin. The two input resistors work together to protect the chip pin and improve safety.

As shown in FIG. 11, as an embodiment, a first pull-up resistor 212 for determining a state is electrically connected between the first input resistor 210 and the serial signal interface 222.

The first pull-up resistor 212 is configured to ensure that a signal wire between the first input resistor 210 and the serial signal interface 222 is in a known high-level state when idle, and to enhance the stability and anti-interference ability of the signal. The state of the signal wire is clear, and system stability is improved.

As shown in FIG. 11, as an embodiment, a second pull-up resistor 213 for determining a state is electrically connected between the second input resistor 211 and the clock interface 223.

The second pull-up resistor 213 is also arranged on the signal wire between the second input resistor 211 and the clock interface 223. Its individual function is consistent with that mentioned above, and the two pull-up resistors are configured together to determine the state of the signal wire.

As shown in FIG. 11, as an embodiment, the second connector 204A corresponding to the secondary controller 201A is electrically connected to a current-limiting resistor 214 for limiting an output current, and a third anti-static device 216 is electrically connected between the second connector 204A and the current-limiting resistor 214. Specifically, a third pin 215 on the second connector 204A corresponding to the secondary controller 201A is electrically connected to the current-limiting resistor 214 for limiting the output current, and the third anti-static device 216 is electrically connected between the third pin 215 and the current-limiting resistor 214.

The current-limiting resistor 214 is a key component used in an electronic circuit to limit the magnitude of the current. Through its resistance characteristic, the flow of the current in the circuit is controlled, sensitive components are protected, signal transmission is stabilized, and energy efficiency is optimized. The current-limiting resistor 214 may be arranged on the signal line where the second connector 204A is located, and meanwhile, the third anti-static device 216 is also arranged between the second connector 204A and the current-limiting resistor 214 to further increase the anti-static function of an entire circuit system.

As shown in FIG. 11, as an embodiment, a fourth pin 217 on the second connector 204A corresponding to the secondary controller 201A is electrically connected to a third input resistor 218 for protecting the pin, and a fourth anti-static device 219 is electrically connected between the fourth pin 217 and the third input resistor 218.

The second connector 204A may also be a rectangular electrical connector, such as a J6 connector. It should be noted that the functions of the third input resistor 218 and the fourth anti-static device 219 on the second connector 204A are consistent with the functions of the same devices mentioned above for the first connector 203A, except that the sensors connected to them are different. In the present embodiment, the sensor connected is the anti-displacement induction sensor 102.

As shown in FIG. 11, as an embodiment, the fourth pin is electrically connected to a filtering capacitor 220 for filtering an interference signal in an input signal.

The filtering capacitor 220 is a key component used in the electronic circuit to smooth an output voltage and suppress noise interference. Through its charging and discharging characteristics, the stability of a power supply or signal is improved, and the filtering capacitor is arranged after the input signal interface to directly perform filtering processing on the inputted interference signal.

As shown in FIG. 11, as an embodiment, the fourth pin 217 is electrically connected to a third pull-up resistor 221 for determining a state.

The function of the third pull-up resistor 221 is the same as that of the first pull-up resistor 212 and the second pull-up resistor 213 mentioned above, except that the sensors connected to them are different, which will not be repeated here.

The above embodiments are only used to illustrate the technical solutions of the present application but not used to limit it. Although the present application has been illustrated in detail with reference to the aforementioned embodiments, those ordinarily skilled in the art should understand that they can still modify the technical solutions recorded in all the aforementioned embodiments, or equivalently replace part of the technical features therein. However, these modifications or replacements do not make the nature of the corresponding technical solutions separate from the spirit and scope of the technical solutions of all the embodiments of the present application, and should be included in the scope of protection of the present application.

## Claims

1. A grass trimming structure (7), comprising:
a grass trimming rope (1);
a winding member (2), comprising a central shaft (201), wherein a bottom surface of the winding member (2) is provided with a movable groove (202), and the grass trimming rope (1) is wound around the central shaft (201);
a movable block (3), abutting against the movable groove (202); and
a base (4), comprising a connecting shaft (401) penetrating through the base (4), a connecting column (402), and a rope outlet (403), wherein the central shaft (201) sleeves the connecting shaft (401), the movable block (3) is movably connected to the connecting column (402), and the rope outlet (403) is configured to allow the grass trimming rope (1) to extend out from the winding member (2).

2. The grass trimming structure (7) according to claim 1, wherein the grass trimming rope (1) is wound around the central shaft (201) in at least one layer; and the grass trimming rope (1) is wound around the central shaft (201) in multiple layers, and extension lengths of the grass trimming rope (1) under different layers are not consistent.

3. The grass trimming structure (7) according to claim 1, further comprising a rope discharging member (5), wherein the rope discharging member (5) comprises a clamping groove (501) and a line outlet (502), the clamping groove (501) is clamped on a side wall of the base (4) close to the rope outlet (403), and the line outlet (502) is formed corresponding to the rope outlet (403).

4. The grass trimming structure (7) according to claim 1, wherein a threading opening (203) is formed in a position of the winding member (2) spaced apart from the central shaft (201), and a line clamping groove (204) is formed in a position of the winding member (2) spaced apart from the threading opening (203), one end of the grass trimming rope (1) penetrates through the threading opening (203) and then is clamped with the line clamping groove (204), and the other end of the grass trimming rope (1) extends out of the rope outlet (403).

5. The grass trimming structure (7) according to claim 1, wherein the movable block (3) comprises a fixing hole (301), a boss (302), and a movable member (303), the fixing hole (301) is movably connected to the connecting column (402) of the base (4), the boss (302) abuts against the movable groove (202), and the movable member (303) abuts against a side wall of the base (4).

6. The grass trimming structure (7) according to claim 5, wherein the base (4) is provided with a first sliding platform (404) and a second sliding platform (405) at positions spaced apart from the connecting column (402), the first sliding platform (404) is arranged corresponding to a bottom surface of the boss (302), and the second sliding platform (405) is arranged corresponding to a bottom surface of the movable member (303).

7. The grass trimming structure (7) according to claim 5, wherein the movable groove (202) is circumferentially formed in the bottom surface of the winding member (2), the movable groove (202) comprises a first groove position (2021) and a second groove position (2022), and the boss (302) moves between the first groove position (2021) and the second groove position (2022).

8. The grass trimming structure (7) according to claim 1, wherein a connecting member (406) is arranged at a position of the bottom of the base (4) and a middle region of the connecting shaft (401), and the connecting member (406) and the connecting shaft (401) are penetrated by a driving shaft of a motor (16).

9. The grass trimming structure (7) according to claim 1, further comprising a cover plate (6), wherein the cover plate (6) comprises a panel (601) and a buckle (602), the panel (601) covers the base (4), and the buckle (602) is clamped to a clamping opening (407) formed in a side wall of the base (4).

10. A courtyard robot (10), comprising a connecting structure (8), the grass trimming structure (7) according to claims 1 to 9, and a vehicle body (9), wherein one end of the connecting structure (8) is connected to the grass trimming structure (7), and the other end of the connecting structure (8) is connected to the vehicle body (9).

11. The courtyard robot (10) according to claim 10, further comprising a grass trimming structure (7) induction system, wherein the grass trimming structure (7) induction system comprises:
an induction sensor (1A), comprising an angle induction sensor (101) and an anti-displacement induction sensor (102), wherein the angle induction sensor (101) and the anti-displacement induction sensor (102) are respectively arranged on the grass trimming structure (7), the angle induction sensor (101) is configured to detect a swing range of the grass trimming structure (7) relative to the vehicle body, and the anti-displacement induction sensor (102) is configured to detect whether the grass trimming structure (7) is correctly mounted in the vehicle body; and
a controller (2A), electrically connected to the induction sensor (1A), and configured to receive an induction signal transmitted by the induction sensor (1A); wherein when the induction signal is transmitted by the angle induction sensor (101), the controller controls the grass trimming structure (7) in the courtyard robot (10) to stop swinging or controls the courtyard robot (10) to move, and when the induction signal is transmitted by the anti-displacement induction sensor (102), the controller controls the courtyard robot (10) to stop working.

12. The courtyard robot (10) according to claim 11, wherein the controller (2A) comprises a secondary controller (201A) and a master controller (202A), the secondary controller (201A) is simultaneously electrically connected to the angle induction sensor (101) through a first connector (203A), the secondary controller (201A) is electrically connected to the anti-displacement induction sensor (102) through a second connector (204A), the secondary controller (201A) is electrically connected to the master controller (202A) through a communication interface (205), the secondary controller (201A) is configured to control the grass trimming structure (7), and the master controller (202A) is arranged on the vehicle body (9) of the courtyard robot (10) and configured to control the secondary controller (201A).

13. The courtyard robot (10) according to claim 12, wherein the secondary controller (201A) is electrically connected to the angle induction sensor (101) through a serial signal interface (222) and a clock interface (223) respectively, the serial signal interface (222) is configured to transmit a first signal and a second signal according to an induction situation of the angle induction sensor (101), and the clock interface (223) is configured for the angle induction sensor (101) to transmit a synchronous clock signal to the secondary controller (201A).

14. The courtyard robot (10) according to claim 12, wherein a first pin (206) on the first connector (203A) corresponding to the secondary controller (201A) is electrically connected to a first anti-static device (207), and a second pin (209) on the first connector (203A) of the secondary controller (201A) is electrically connected to a second anti-static device (208).

15. The courtyard robot (10) according to claim 14, wherein the first pin (206) on the first connector (203A) corresponding to the secondary controller (201A) is electrically connected to a first input resistor (210) for protecting the pin, and the second pin (209) is electrically connected to a second input resistor (211) for protecting the pin.

16. The courtyard robot (10) according to claim 15, wherein a first pull-up resistor (212) for determining a state is electrically connected between the first input resistor (210) and the serial signal interface (222).

17. The courtyard robot (10) according to claim 15, wherein a second pull-up resistor (213) for determining a state is electrically connected between the second input resistor (211) and the clock interface (223).

18. The courtyard robot (10) according to claim 11, wherein a third pin (215) on the second connector (204A) corresponding to the secondary controller (201A) is electrically connected to a current-limiting resistor (214) for limiting an output current, and a third anti-static device (216) is electrically connected between the third pin (215) and the current-limiting resistor (214).

19. The courtyard robot (10) according to claim 18, wherein a fourth pin (217) on the second connector (204A) corresponding to the secondary controller (201A) is electrically connected to a third input resistor (218) for protecting the pin, and a fourth anti-static device (219) is electrically connected between the fourth pin (217) and the third input resistor (218).

20. The courtyard robot (10) according to claim 19, wherein the fourth pin (217) is electrically connected to a filtering capacitor (220) for filtering an interference signal in an input signal.
